(19) **Europäisches Patentamt / European Patent Office / Office européen des brevets**

(11) **EP 4 653 181 A1**

(12) # EUROPEAN PATENT APPLICATION

(43) Date of publication:
26.11.2025 Bulletin 2025/48

(21) Application number: 24177393.6

(22) Date of filing: 22.05.2024

(51) International Patent Classification (IPC):
*B29C 73/10* (2006.01)   *B29C 73/26* (2006.01)

(52) Cooperative Patent Classification (CPC):
**B29C 73/10; B29C 73/26**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **LM Wind Power A/S
6000 Kolding (DK)**

(72) Inventor: **Thomas, Merzhaeuser
85748 Garching (DE)**

(74) Representative: **Zimmermann & Partner
Patentanwälte mbB
Postfach 330 920
80069 München (DE)**

(54) **A METHOD FOR REPAIRING A FIBER-COMPOSITE ELEMENT HAVING A LOCALLY DETERIORATED AREA, A REPAIR PATCH FOR A FIBER COMPOSITE ELEMENT, AND A SET OF AT LEAST TWO REPAIR PATCHES**

(57) A method of repairing a fiber composite element (100) having a locally deteriorated area (110), the method including forming a repair section (120) in the fiber composite element by removing material from the fiber composite element in a repair area comprising the locally deteriorated area, the formed repair section having a continuous repair surface (125), placing a pre-formed repair patch (130) in the repair section, the pre-formed repair patch having a first section with a contact surface (145), the contact surface being at least partly shaped corresponding to the shape of the repair surface, arranging the pre-formed repair patch to bring the contact surface into contact with the repair surface, and binding the pre-formed repair patch to the repair section.

# Fig. 2C

**Description**

FIELD OF THE DISCLOSURE

The present subject matter relates generally to repairing a fiber composite element, in particular a fiber composite element of a wind turbine blade, to a repair patch for a fiber composite element and a set of at least two repair patches.

TECHNICAL BACKGROUND

Wind power is considered one of the cleanest, most environmentally friendly energy sources presently available, and wind turbines have gained increased attention in this regard. A modern wind turbine typically includes a tower, generator, gearbox, nacelle, and a rotor with one or more wind turbine blades. The wind turbine blades capture kinetic energy from wind using known foil principles and transmit the kinetic energy through rotational energy to turn a shaft coupling the wind turbine blades to a gearbox, or if a gearbox is not used, directly to the generator. The generator then converts the mechanical energy to electrical energy that may be deployed to a utility grid.

Wind turbine blades are typically made using materials having a high stiffness to weight ratio such as fiber composites. When parts of a fiber composite element are damaged, e.g. due to aging or fatigue, it is often challenging to repair the damaged fiber composite element. Repairing fiber composite elements can be done by pre-formed repair patches. Pre-formed repair patches need to fit to very tight tolerances to allow constant bond gaps. The problem in the practical use of pre-formed repair patched is in the need to machine the blade surface very accurate to the shape of a pre-formed repair patch. Further, the pre-formed repair patch needs to be placed very accurately in the repair slot.

The present invention addresses these issues by providing a method of repairing a fiber composite element having a locally deteriorated surface and a repair patch.

SUMMARY OF THE DISCLOSURE

Reference will now be made in detail to the various embodiments of the present disclosure, one or more examples of which are illustrated in the figures. Generally, only the differences with respect to individual embodiments are described. Each example is provided by way of explanation and is not meant as a limitation of the present disclosure. Features illustrated or described as part of one embodiment can be used on or in conjunction with other embodiments to yield yet a further embodiment. It is intended that the description includes such modifications and variations.

Repair of fiber composite elements, such as elements of wind turbine blades, for example spar caps, during service require cost effective solutions that can be done with short cycle times in the field. To meet these requirements, pre-formed repair patches, that get bonded to machined surface slots in the repair area, may be used. The pre-formed repair patches need to fit very tight tolerances to allow constant bond gaps. The bond gap is a gap between the fiber composite element and the pre-formed repair patch. When fiber composite elements, such as elements of wind turbine blades, are repaired in the field, the environment in which this repair is done makes the repair more difficult. Particularly, the forming of the repair section and/or the fitting the pre-formed repair patches within the tight tolerances is more difficult in the environment in which the wind turbines blades are installed.

One problem in the practical use of pre-formed repair patches is in the need to machine the blade surface very accurate to the shape of the pre-formed repair patch. Furthermore, after machining the blade surface, the pre-formed repair patches need to be placed very accurate to the repair slot. The pre-formed repair patches need to be placed to fit to very tight tolerances to provide a constant bond gap between the repair patch and the fiber composite element. Need for tight tolerance fit makes the preparation of matching surfaces very difficult. The geometry of the fiber composite element, for example a chamfer portion of a wind turbine blade with defined chamfer ratios, may further increase the difficulty of machining the fiber composite element and/or placing the pre-formed repair patch to fit tight tolerances. These surfaces are generally not flat, for example, due to curvature in span and chord direction. The non-flat surfaces are difficult to machine as they are basically an offset to the surface, e.g. the blade surface. These conditions make the use of pre-formed repair patches in the repair of fiber-composite elements challenging and there is a need for a method that allows repair of fiber-composite elements by pre-formed repair patches that can be fit to tight tolerances.

In light of the above, a method for repairing a fiber composite element having a locally deteriorated area according to claim 1, a repair patch for a fiber composite element according to claim 12, and a set of at least two repair patches according to claim 15 is provided. Further aspects, advantages, and features are apparent from the dependent claims, the description and the accompanying drawings.

The method according to the present invention provides a repair that is less dependent on placement of the repair patch and allows to implement the repair with pre-formed patches in industrial scale within the given environment in the field.

Throughout this disclosure, a pre-formed repair patch is understood to be a repair patch used in the repair of fiber composite elements. The pre-formed repair patch may be a pre-form, particularly an uncured pre-form. The pre-formed repair patch may be a pre-fabricated repair patch, particularly a cured pre-fabricated repair patch. The pre-fabricated repair patch may be formed by curing a pre-form.

The present disclosure provides a method that allows for simplified machining of repair surfaces and to provide an industrialized way for repairing fiber composite elements with high quality. The method of the present disclosure is less dependent on placement of the repair patch. Particularly, this allows to continuously ensure constant bond gaps. Advantageously, the method of the present disclosure can be provided with pre-formed patches in industrial scale. The method can be carried out in the field, i.e. on fiber composite elements of already commissioned machines, such as wind turbine blades.

The present disclosure provides a method to improve the way chamfered repair surfaces are prepared. The present disclosure provides a method for repairing fiber composite elements at an industrial level with sufficient quality. The method of the present disclosure allows to form repair surfaces with high accuracy which improves the accuracy when aligning the pre-formed repair patch on the repair surface. Particularly, the repair surfaces can be formed by machining to ensure high accuracies. The present disclosure provides a method to repair a fiber composite element that is less dependent on placement of the repair patch, enabling to implement the repair with pre-formed patches in industrial scale. Particularly, the method can be performed within the given environment of fiber composite elements in already commissioned machines. Some of the advantages of the present application are, that the method according to the present invention allows for accurate repairs within the design intent, reduce the repair time on the blade in the field, reduce the cost of repairs, and to reduce the warranty cost of wind turbine blades.

According to an aspect, a method of repairing a fiber composite element having a locally deteriorated area is provided. The method includes forming a repair section in the fiber composite element by removing material from the fiber composite element in a repair area comprising the locally deteriorated area, the formed repair section having a continuous repair surface, placing a pre-formed repair patch in the repair section, the pre-formed repair patch having a first section with a contact surface, the contact surface being at least partly shaped corresponding to the shape of the repair surface, arranging the pre-formed repair patch to bring the contact surface into contact with the repair surface; and binding the pre-formed repair patch to the repair section.

The repair section is formed in the fiber composite element by removing material from the fiber composite element. The surface of the repair section may correspond to a surface that is formed in the fiber composite element by removing material from the fiber composite element. The surface of the repair section may correspond to a machined surface of the fiber composite element, particularly a machined surface of the fiber composite element that is machined during the repair of the fiber composite element. The repair section is formed such that the formed repair section has a continuous repair surface. In particular, a continuous repair surface is not provided with edges or steps. The continuous repair surface particularly corresponds to an entire surface of the repair section. The surface of the continuous repair section may be continuous. The surface of the repair section may correspond to the continuous repair surface.

The removal of material when forming the continuous repair surface may not be done perfectly, in particular at the edges of the continuous repair surface. For example, due to machining inaccuracies, the shape in the region where the surface of the repair section meets the surface of the non-worked fiber composite element may be non-continuous and have an inaccurate shaping, e.g. there may be a small step. Such an inaccuracy is typically smaller than 1 mm, particularly smaller than 0.5 mm. In contrast, in a repair method known to the inventor, a repair section is formed as rectangular with one or more sidewalls and one or more bottom surfaces. Therein, the one or more sidewalls substantially shape the geometry of such repair sections and the one or more sidewalls are not due to manufacturing and/or geometric restraints. It is understood, that such one or more sidewalls do not correspond to the inaccuracies described.

The forming a repair section in the fiber composite element by removing material from the fiber composite element may be done by machining the repair area. Formation of the continuous repair surface, for example by machining, can be automated. A machining tool may be used for machining the repair area. The fiber composite element may be an element of a wind turbine, particularly a wind turbine blade. Forming the repair section may comprise using a machining tool. The pre-formed repair patches may be fitted to the machined recess with high precision. Fitting of the pre-formed repair patches to the machined recess reduces the risk of out of tolerance placement.

The pre-formed repair patch has a first section with a contact surface. The pre-formed repair patch may have a second section adjacent to the first section. The first section may form a lower part of the pre-formed repair patch configured to be brought into contact with the fiber composite element. The second section may form an upper part of the pre-formed repair patch opposite the lower part. The contact surface is at least partly shaped corresponding to the shape of the repair surface. That is, at least a part, i.e. a first part, of the contact surface is shaped corresponding to the shape of the repair surface. A size of the first part may correspond to a size of the repair surface. The size of the first part may be larger than a size of the repair surface. The shape of the first part may be extrapolated according to the shape of the repair surface. The other part, i.e. a second part, of the contact surface not comprised in the first part, may be shaped similar to the first part. The second part may be formed to correspond to the shape of the repair surface. The shape of the second part may be extrapolated according to the shape of the repair surface. The second part may not be in contact with the repair section. The second part may be formed arbitrarily. Advantageously, the contact surface being at least partly shaped corresponding to the shape of the repair surface improves an arranging accuracy of the pre-formed repair patch in the repair section. The continuous repair surface and correspondingly shaped contact surface facilitate easier alignment of the pre-formed repair patch with high accuracy. The continuous repair surface and correspondingly shaped contact surface allow to provide constant bond gaps. Particularly, constant bond gaps can even be provided for slight misalignment of the pre-formed repair patch. The pre-formed repair patch may be aligned in many different positions along a direction of the continuous repair surface, particularly may be aligned freely in a direction of the continuous repair surface. The pre-formed repair patch can be aligned in any of the different positions to provide a constant bond gap, thereby allowing for faster alignment with less effort and with higher accuracy. The method of repairing a fiber composite element according to the present application allows to achieve constant bond gaps while using pre-formed repair patches in industrial scale.

According to an embodiment, the pre-formed repair patch is a pre-fabricated repair patch. As understood herein, a pre-fabricated repair patch has undergone a curing process, i.e., it is a cured pre-formed repair patch. According to other embodiments, the pre-formed repair patch is an uncured pre-form and repairing the fiber composite element includes curing the pre-form. The pre-form may be bonded to the repair section by curing the pre-form.

The pre-form may be cured before placing the pre-form in the repair section, particularly to form a pre-fabricated repair patch. The pre-form may substantially have the shape of the pre-fabricated repair patch. The pre-form may be infused and/or impregnated with resin. The pre-form may be cured to form the pre-fabricated repair patch. Particularly, cured and machined to form the pre-fabricated repair patch, particularly machined to form the first section with the contact surface, the contact surface being at least partly shaped corresponding to the shape of the repair surface. The pre-form may be stored at a storage facility. The pre-fabricated repair patch may be fabricated from the pre-form at a location where the method of repairing a fiber composite element having a locally deteriorated area according to the present application is carried out.

According to an embodiment, that can be combined with other embodiments described herein, a pre-form is cured to form the pre-fabricated repair patch having the first section with a contact surface, the contact surface being at least partly shaped corresponding to the shape of the repair surface. The pre-form may be infused and/or impregnated with a resin before curing of the pre-form. Particularly, the pre-form may be cured and machined to form the pre-fabricated repair patch, particularly machined to form the first section with the contact surface, the contact surface being at least partly shaped corresponding to the shape of the repair surface. The pre-form may be infused and/or the pre-form may be machined after forming the repair section.

The pre-formed repair patch is placed in the repair section. The pre-formed repair patch is arranged to bring the contact surface into contact with the repair surface. The pre-formed repair patch may be arranged such that the first part of the contact surface is, at least partially, in contact with the repair surface. The pre-formed repair patch may be arranged such that the second part of the contact surface is not in contact with the repair surface. The pre-formed repair patch may be arranged such that the contact surface is in contact with the repair surface and a bond gap is constant. The bond gap is the gap between the fiber composite element and the pre-formed repair patch. Particularly, the bond gap is the gap between the repair surface and the contact surface.

The pre-formed repair patch is bonded to the repair section. According to some embodiments, which can be combined with further embodiments described herein, the binding the pre-formed repair patch to the repair section includes providing an adhesive layer between the repair patch and the repair section. The adhesive layer may be applied to the repair section and/or the pre-formed repair patch, particularly to the repair surface and/or the contact surface. The adhesive layer may be applied before the pre-formed repair patch is placed in the repair section. Having a constant bond gap advantageously allows to provide an adhesive layer having constant thickness between the fiber composite element and the pre-formed repair patch, particularly between the repair surface and the contact surface. The method of the present application allows to provide bond gaps with improved accuracy. The method of the present disclosure advantageously enables an adhesive layer to be provided between the repair surface and the contact surface with reduced variations in a thickness of the adhesive layer. That is, an adhesive layer can be provided having an improved thickness uniformity. The adhesive layer with improved thickness uniformity results in an improved bonding between the pre-formed repair patch and the fiber composite element.

The formed repair section has a continuous repair surface. The repair surface may be a flat surface, particularly a flat plane. The repair surface may be a flat surface without bulges. The repair surface may be smooth. The repair surface may by curved and/or have bulges. In some embodiments, which can be combined with other embodiments described herein, a maximum curvature of the continuous repair surface is less than $5 \text{ m}^{-1}$, particularly less than $1 \text{ m}^{-1}$, more particularly less than $0.05 \text{ m}^{-1}$. Wherein the curvature is defined as the inverse of the radius. That is, a curvature of less than $5 \text{ m}^{-1}$, particularly less than $1 \text{ m}^{-1}$, more particularly less than $0.05 \text{ m}^{-1}$ corresponds to a radius of more than 0.2 m, particularly more than 1 m, more particularly more than 20 m. A flat plane has a curvature approaching 0, since a radius describing the flat plane is approaching infinity. For example, typical corners between intersecting surface, which are formed by machining, for example, by milling, are usually in the range of less then one millimeter up to few tens of millimeter. Advantageously, having the continuous repair surface with small curvature, such as less than $5 \text{ m}^{-1}$, particularly

less than 1m$^{-1}$, more particularly less than 0.05 m$^{-1}$ may improve the arranging of the pre-formed repair patch in the repair section such that the pre-formed repair patch is arranged more easily, faster and/or more accurately. Particularly, such that a constant bond gap can be achieved more easily and consistently. In some embodiments, which can be combined with other embodiments described herein, a maximum curvature of a surface of the repair section is less than 5 m$^{-1}$, particularly less than 1m$^{-1}$, more particularly less than 0.05 m$^{-1}$.

In some embodiments, the repair surface is a concave cylindrical surface segment and/or the contact surface is a convex cylindrical surface segment. The repair surface may be curved inwards into the fiber composite element. The contact surface may be curved outwards, such as to form a bulge. The concave cylindrical surface segment extends along a first extended direction. In a cross-section perpendicular to the first extended direction, the concave cylindrical surface segment has a first semi-circular shape. The first semi-circular shape has a first constant radius. The first constant radius may be the same in all cross-sections of the concave cylindrical surface segment perpendicular to the first extended direction. The first semi-circular shape has a first angular extension. The angular extension corresponds to the opening angle of the concave cylindrical surface segments. The first angular extension may be the same in all cross-sections of the concave cylindrical surface segment perpendicular to the first extended direction. The contact surface being a convex cylindrical surface segment extends along a second extended direction. In a cross-section perpendicular to the second extended direction, the convex cylindrical surface segment has a second semi-circular shape. The second semi-circular shape has a second constant radius. The second constant radius may be the same in all cross-sections of the convex cylindrical surface segment perpendicular to the second extended direction. The second semi-circular shape has a second angular extension. The second angular extension may be the same in all cross-sections of the convex cylindrical surface segment perpendicular to the second extended direction. The first constant radius may be substantially equal to the second constant radius. The second angular extension may be equal or, preferably, larger than the first angular extension. Advantageously, during the arranging the pre-formed repair patch to bring the contact surface into contact with the repair surface, the repair surface being a concave cylindrical surface segment and the contact surface being a convex cylindrical surface segment improves alignment of the pre-formed repair patch in an angular direction, i.e. an azimuthal direction. Particularly, an arrangement of the pre-formed repair patch is not constrained in the angular direction. That is, the pre-formed repair patch can be shifted in the angular direction without affecting an alignment accuracy. The pre-formed repair patch can be aligned in different positions along the angular direction. The pre-formed repair patch can be aligned freely in the angular direction. Beneficially, the repair surface being a concave cylindrical surface segment and the contact surface being a convex cylindrical surface segment facilitate the formation of a constant bond gap along the angular direction.

In some embodiments, the repair surface is a concave spherical surface segment and or the contact surface is a convex spherical surface segment. The repair surface may be curved inwards into the fiber composite element. The contact surface may be curved outwards, such as to form a bulge. The concave spherical surface segment has a first constant radius. The concave spherical surface segment has a first angular extension. The angular extensions describing an opening angle of the spherical surface segment. The convex spherical surface segment has a second constant radius. The convex spherical surface segment has a second angular extension. The first constant radius and the second constant radius may be substantially the same. The second angular extension may be equal or, preferably, larger than the first angular extension. Advantageously, during the arranging the pre-formed repair patch to bring the contact surface into contact with the repair surface, the repair surface being a concave spherical surface segment and the contact surface being a convex spherical surface segment improve alignment of the pre-formed repair patch. Particularly, an arrangement of the pre-formed repair patch is not constrained, particularly not constrained in a polar direction or an azimuthal direction. That is, the pre-formed repair patch can be shifted in a direction along the concave spherical surface segment without affecting an alignment accuracy. The pre-formed repair patch can be aligned in different positions in the polar direction and/or the azimuthal direction. The pre-formed repair patch can be aligned freely in the polar direction and/or the azimuthal direction. Beneficially, the repair surface being a concave spherical surface segment and the contact surface being a convex spherical surface segment facilitate the formation of a constant bond gap.

The fiber composite element may be an element of a wind turbine, particularly of a wind turbine blade. The fiber composite element may be a spar cap of a wind turbine blade. According to an embodiment, the fiber composite element is a wind turbine blade having a spanning direction; the pre-formed repair patch has an elongated direction; and the pre-formed repair patch is arranged with the elongated direction in the spanning direction.

The pre-formed repair patch may be made of the same material as the fiber composite element. The pre-formed repair patch may be made of a material having similar physical properties. The pre-formed repair match may be made of a material typically used for repairing the fiber composite element which is to be repaired. For example, the manufacturer of the fiber composite element may provide a list of suitable materials which can be used for repairing the fiber composite element, or such suitable materials may be known in the art. The repair patch can be formed from such a material according to the list of suitable materials. In one embodiment, the pre-formed repair patch is a fiber composite element.

The fiber composite element may comprise oriented fibers. The fibers of the fiber composite element may be oriented in a first oriented direction. The pre-formed repair patch may comprise oriented fibers. The fibers of the pre-formed repair patch may be oriented in a second oriented direction. When placing the pre-formed repair patch, the pre-formed repair patch may be oriented such that the orientation of fibers of the pre-formed repair patch align with an orientation of fibers of the fiber composite element. The pre-formed repair patch may be arranged such that the first oriented direction aligns with the second oriented direction. For example, where the contact surface is a convex cylindrical surface segment, the forming of a repair section may be done in consideration of the first oriented direction and/or the second oriented direction. That is, the repair section having a concave cylindrical surface segment may be formed such, that the first oriented direction may be arranged to a cylinder axis of the concave cylindrical surface segment in the same orientation as the second oriented direction is arranged to a cylinder axis of the convex cylindrical surface segment. Where the contact surface is a convex spherical surface segment, the pre-formed repair patch may be arranged such that the first oriented direction aligns with the second oriented direction. The second oriented direction may be aligned to the first oriented direction by turning the pre-formed repair patch. Particularly, the pre-formed repair patch may be turned around an axis perpendicular to the second oriented direction. According to an embodiment, which can be combined with other embodiments described herein, arranging the pre-formed repair patch comprises aligning the pre-formed repair patch such that a fiber orientation of the pre-formed repair patch is parallel to a fiber orientation of the fiber composite element.

The pre-formed repair patch may have a size that is larger than the repair section. That is, when arranging the pre-formed repair patch in the repair section, the pre-formed repair patch may extend outwards of the fiber composite element. An exterior surface of the pre-formed repair patch may be formed to match a surface of the fiber composite element. The exterior surface may be formed by machining the pre-formed repair patch. The exterior surface may be formed by machining the second section and/or by machining the second part of the first section. The exterior surface may be formed by removing material from the pre-formed repair patch. The exterior surface of the pre-formed repair patch may be formed in a shape to match a shape of the undeteriorated surface of the fiber composite element in the repair area. The shape of the undeteriorated surface of the fiber composite element in the repair area may be measured before forming the repair section. The shape of the fiber composite element may be standardized and/or known such that it can be determined by knowing the location of the repair area. The forming an exterior surface of the pre-formed repair patch may be a non-critical tolerance operation. The forming an exterior surface may be done with higher tolerances compared to, for example, the formation of the repair section. According to an embodiment, which can be combined with further embodiments described herein, the method of repairing a fiber composite element includes forming an exterior surface of the pre-formed repair patch by removing material from the pre-formed repair patch, such that the exterior surface matches a surface of an undeteriorated surface of the fiber composite element in the repair area when the contact surface is arranged in contact with the repair surface. In some embodiments, the forming the exterior surface is done after binding the pre-formed repair patch to the repair surface.

A chamfer angle $\alpha/2$ of the repair section is defined as the angle of the repair section at the interface with the fiber composite element. The chamfer angle $\alpha/2$ may be defined between a theoretical flat pane spanning the repair section and a tangent on the repair section at the interface with the fiber composite element. The chamfer angle $\alpha/2$ is half the opening angle $\alpha$ of a concave cylindrical surface segment or a concave spherical surface segment. The chamfer angle $\alpha/2$ may be limited by physical properties of the fiber composite element. The chamfer angle $\alpha/2$ may be dependent on a shaft ratio of the fiber composite element in the repair section and/or an orientation of the repair section within the fiber composite element. According to an embodiment, a chamfer angle $\alpha/2$ of the repair section is determined based on a shaft ratio of the fiber composite element in the repair section and/or an orientation of the repair section within the fiber composite element. Particularly an orientation of the repair section with respect to the first oriented direction.

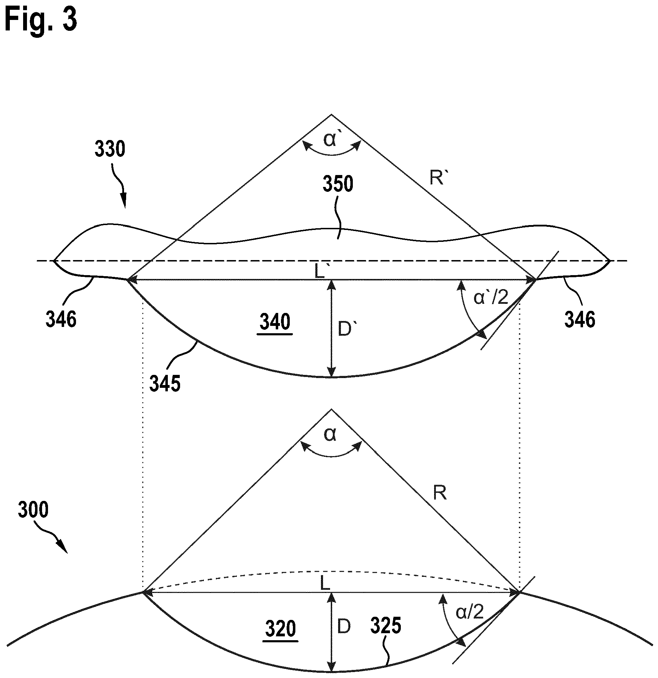

In some embodiments, the repair section may have a semi-circular cross section. For example, a concave cylindrical surface segment or a concave spherical surface segment has a semi-circular cross section. A geometry of the repair section is defined by the chamfer angle $\alpha/2$, a repair length (L), a repair depth (D) and a repair radius (R). The repair length (L) describes the extension of the repair section in the semi-circular cross section. The repair depth (D) describes the extension of the repair section into the fiber composite element. The repair radius (R) describes a radius of the semi-circular cross section. The geometry of the repair section may be defined by the chamfer angle $\alpha$ and one of the repair length (L), the repair depth (D) and the repair radius (R). The opening angle $\alpha$, the chamfer angle $\alpha/2$, the repair length (L), the repair depth (D) and the repair radius (R) are illustrated in Fig. 3 described below. The chamfer angle $\alpha/2$ is dependent on the chamfer ratio and can be determined according to the formula $\frac{\alpha}{2} =$ arctan(*chamfer ratio*).

In some embodiments, a repair length (L) is up to 4 m, particularly up to 6m. A repair depth (D) may be determined based on formula (1) and/or a repair radius (R) may be determined based on formula (2):

$$(1) \quad D = \frac{L}{2} * \tan\left(\frac{\alpha}{4}\right);$$

$$(2) \quad R = \frac{L}{2 \sin\left(\frac{\alpha}{2}\right)}$$

In some embodiments, a repair radius (R) is up to 200 m, particularly up to 300 m. A repair depth (D) may be determined based on formula (3) and/or a repair length (L) may be determined based on formula (4):

$$(3) \quad D = R * \left(1 - \cos\left(\frac{\alpha}{2}\right)\right);$$

$$(4) \quad L = 2R * \sin\left(\frac{\alpha}{2}\right)$$

In some embodiments, a repair depth (D) is up to 20 mm, particularly up to 30 mm. A repair length (L) may be determined based on formula (5) and/or a repair radius (R) may be determined based on formula (6):

$$(5) \quad L = \frac{2D}{\tan\left(\frac{\alpha}{4}\right)} = 2D * \cot\left(\frac{\alpha}{2}\right);$$

$$(6) \quad R = \frac{D}{1 - \cos\left(\frac{\alpha}{2}\right)}$$

Exemplary geometries of the repair section are shown in table 1 and table 2 below for different values of chamfer angle $\alpha$, repair length (L), repair depth (D) and repair radius (R). In table 2, example 1 and 2 provide values for repair length (L) and depth (D) for two different chamfer ratios and dependent on the repair radius (R).

Table 1

| Driven by Chamfer Angle and: | Radius | Repair Depth | Repair Length |
|---|---|---|---|
| Chamfer Ratio | 1/100 | 1/100 | 1/100 |
| Chamfer Angle $\alpha/2$ in ° | 0.57 | 0.57 | 0.57 |
| Opening Angle $\alpha$ in ° | 1.15 | 1.15 | 1.15 |
| Repair Length in mm | 2800 | 2000 | 2400 |
| Repair Radius in mm | 140000 | 100007 | 120006 |
| Repair Depth | 7.00 | 5.00 | 6.00 |

Table 2

| Repair Radius in mm | 60000 | 80000 | 100000 | 120000 | 140000 |
|---|---|---|---|---|---|
| **Example 1** | | | | | |
| Chamfer Ratio | 1/80 | 1/80 | 1/80 | 1/80 | 1/80 |
| Chamfer Angle a/2 in ° | 0.36 | 0.36 | 0.36 | 0.36 | 0.36 |
| Repair Length in mm | 1500 | 2000 | 2500 | 3000 | 3500 |
| Repair Depth in mm | 4.69 | 6.25 | 7.81 | 9.37 | 10.94 |
| **Example 2** | | | | | |
| Chamfer Ratio | 1/100 | 1/100 | 1/100 | 1/100 | 1/100 |
| Chamfer Angle a/2 in ° | 0.57 | 0.57 | 0.57 | 0.57 | 0.57 |
| Repair Length in mm | 1200 | 1600 | 2000 | 2400 | 2800 |
| Repair Depth | 3.0 | 4.0 | 5.0 | 6.0 | 7.0 |

**EP 4 653 181 A1**

The geometry of the repair section may be chosen according to the actual physical dimensions of the locally deteriorated area. The physical dimensions of the locally deteriorated area may be used to determine if the repair surface is formed as a concave cylindrical surface segment, a concave spherical surface segment, or any other suitable shape. For example, for a defect depth of 4.9 mm, in example 1 the repair sections having a repair length of 2000 mm or more may be suitable and in example 2 the repair sections having a repair length of 2000 mm or more may be suitable. For a defect length of 2346 mm, in example 1 the repair sections having a repair depth of 7.81 mm or more may be suitable and in example 2 the repair sections having a repair depth of 6 mm or more may be suitable.

It is understood, that these values are merely provided as examples and are in no way limiting the chamfer angle $\alpha/2$, repair length (L), repair depth (D) and repair radius (R) to the provided values. The chamfer angle $\alpha/2$ is dependent on material properties as described above. The chamfer angle $\alpha/2$ may be up to 1°, even up to 2°. The repair length (L) may be up to 20 m, even up to 40 m. The repair depth (D) may be up to 50 mm, even up to 100 mm. The repair radius (R) may be up to 1000 m, even up to 2000 m.

In some embodiments, which can be combined with further embodiments described herein, the fiber composite element is a wind turbine blade and the method is carried out while the wind turbine blade is installed in a wind turbine.

According to an aspect, a repair patch for a fiber composite element is provided. The repair patch having a patch body including a first section being a cylinder segment or a spherical segment, the first section having a continuous contact surface, and a second section adjacent to the first section, wherein the first section is pre-formed for use in a repair of the fiber composite element.

The repair patch may be formed of a same material as the fiber composite element to be repaired. The repair patch may be a fiber composite element. The repair patch may be an uncured pre-form. The repair patch may be a pre-fabricated repair patch, particularly a cured pre-fabricated repair patch. The repair patch may be cured. The repair patch may be uncured.

In some embodiments, the first section has a segment length (L') up to 4m, particularly up to 6m, a segment depth (D') up to 20 mm, particularly up to 30 mm, and/or a segment radius (R') up to 200 m, particularly up to 300 m. A geometry of the first section may be determined in a similar manner as described above for the repair section. The segment chamfer angle $\alpha'/2$ is determined depending on the fiber composite element to be repaired. The segment opening angle $\alpha'$, the segment chamfer angle $\alpha'/2$, the segment length (L'), the segment depth (D') and the segment radius (R') are illustrated in Fig. 3 described below. The segment depth (D') may be determined based on formula (7) and/or the segment radius (R') may be determined based on formula (8):

$$(7) \qquad D' = \frac{L'}{2} * \tan\left(\frac{\alpha'}{4}\right);$$

$$(8) \qquad R' = \frac{L'}{2\sin\left(\frac{\alpha'}{2}\right)}$$

The segment depth (D') may be determined based on formula (9) and/or the segment length (L') may be determined based on formula (10):

$$(9) \qquad D' = R' * \left(1 - \cos\left(\frac{\alpha'}{2}\right)\right);$$

$$(10) \qquad L' = 2R' * \sin\left(\frac{\alpha'}{2}\right)$$

The segment length (L') may be determined based on formula (11) and/or the segment radius (R') may be determined based on formula (12):

$$(11) \qquad L' = \frac{2D'}{\tan\left(\frac{\alpha'}{4}\right)} = 2D' * \cot\left(\frac{\alpha'}{2}\right);$$

$$(12) \qquad R' = \frac{D'}{1-\cos\left(\frac{\alpha'}{2}\right)}$$

The repair patch may comprise oriented fibers. In some embodiments a fiber orientation of the repair patch is parallel to an extended direction of the repair patch or a fiber orientation of the repair patch is perpendicular to an extended direction of the repair patch.

According to an aspect, a set of at least two repair patches according to embodiments described herein is provided. The repair patches differ in at least one of a segment length (L'), a segment depth (D') and a segment radius (R').

Those skilled in the art will recognise additional features and advantages upon reading the following detailed description, and upon viewing the accompanying drawings.

BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIGS. 1A - 1D show schematic views illustrating a fiber composite element having a locally deteriorated area. The fiber composite element is shown during different stages of repairing the fiber composite element.

FIGS. 2A - 2D show schematic views illustrating a fiber composite element having a locally deteriorated area. The fiber composite element is shown during different stages of repairing the fiber composite element.

FIG. 3 shows a schematic view of a fiber composite element having a repair section and a pre-formed repair patch.

FIG. 4 shows a schematic and perspective view of a pre-formed repair patch.

Fig. 5 shows a schematic and perspective view of a pre-formed repair patch.

FIG. 6 illustrates a method of repairing a fiber composite element having a locally deteriorated area with a pre-formed repair patch.

Single features depicted in the figures are shown relatively with regards to each other and therefore are not necessarily to scale.

DETAILED DESCRIPTION OF THE DRAWINGS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

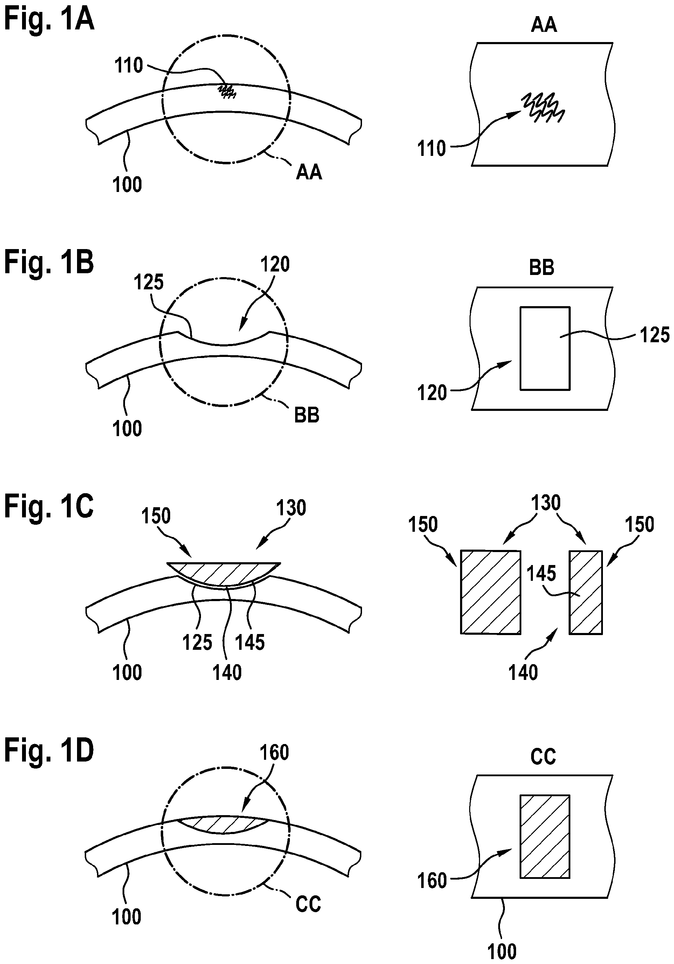

FIGS. 1A - 1D show a schematic view illustrating a fiber composite element. The fiber composite element is shown during different stages of repairing the fiber composite element according to a method of the present disclosure. Fig. 1A shows a fiber composite element 100 having a locally deteriorated area 110. The fiber composite element 100 is shown in a cross-sectional view. As shown in Fig. 1A, the locally deteriorated area 110 extends into the fiber composite element. The excerpt AA shows a top view of the fiber composite element in which the locally deteriorated area 110 is seen. In the excerpt AA it can be seen, that the locally deteriorated area 110 also extends on the surface of the fiber composite element 100.

Fig. 1B shows the fiber composite element 100 in which a repair section 120 has been formed. The repair section 120 has a continuous repair surface 125. As shown in Fig. 1B, the repair section 120 is formed by removing material from the fiber composite element 100. Particularly, removing material such that the locally deteriorated area is removed. The material is removed such that the repair section 120 curves inwards into the fiber composite element 100. The repair section 120 extends into the fiber composite element by a distance corresponding to a repair depth (D). The repair depth (D) is larger than the distance by which the locally deteriorated area extended into the fiber composite element. In the cross-sectional view of Fig. 1B, the repair surface 125 is shown to have a semi-circular shape. Excerpt BB shows a top view of the fiber composite element 100 having the repair surface 125. As seen in Fig. 1B, the repair surface 125 extends along an extended direction with the semi-circular cross-section. Particularly, the repair surface 125 is in the shape of a cylindrical surface segment. The cylindrical surface segment is concave.

Fig. 1C shows the fiber composite element 100 having the repair section 120 formed therein. A pre-formed repair patch 130 is arranged in the repair section 120. The pre-formed repair patch has a contact surface 145 that corresponds in shape to the repair surface 125. The pre-formed repair patch 130 has a first section 140 and a second section 150. The first section 140 may form the contact surface 145. The pre-formed repair patch 130 is in the shape of a cylindrical segment. The pre-formed repair patch 130 is arranged in the repair section 120, such that the contact surface 145 is adjacent to the repair surface 125. Particularly, the contact surface 145 contacts the repair surface 125. Advantageously, the repair surface being a concave cylindrical surface segment and the contact surface being a convex cylindrical surface segment improves alignment in the angular direction. Particularly, the pre-formed repair patch can be shifted in an angular direction. A contact between the contact surface 145 and the repair surface 125 can be provided for different angular alignments of the pre-formed repair patch to the repair section. The pre-formed repair patch can be aligned in different positions along the angular direction. The pre-formed repair patch can be aligned freely in the angular direction. Advantageously, a constant bond gap is facilitated. The pre-formed repair patch may be bonded to the fiber composite element. Particularly, the contact surface 145 may be bonded to the repair surface 125.

As shown in Fig. 1C, a size of the pre-formed repair patch is such, that after arranging the pre-formed patch in the repair section, the pre-formed repair patch extends outwards of the fiber composite element. Particularly, the first section 140 partially extends outwards of the fiber composite element. The second section 150 extends fully outwards of the fiber composite element. An exterior surface of the pre-formed repair patch may be formed to match a surface of an undeteriorated surface of the fiber composite element in the repair section when the contact surface is arranged in contact with the repair surface. The exterior surface may be formed by machining of the pre-formed repair patch, particularly by machining of the second section 150 and/or machining the parts of the first section 140 extending outwards of the fiber composite element. This is shown in Fig. 1D. The fiber composite element 100 has a repaired surface 160. An exterior surface of the repaired surface 160 corresponds in shape to the shape of the undeteriorated surface of the fiber composite element, as seen in Fig. 1A. The excerpt CC shows that the repaired surface 160 extends over the entire repair section 120.

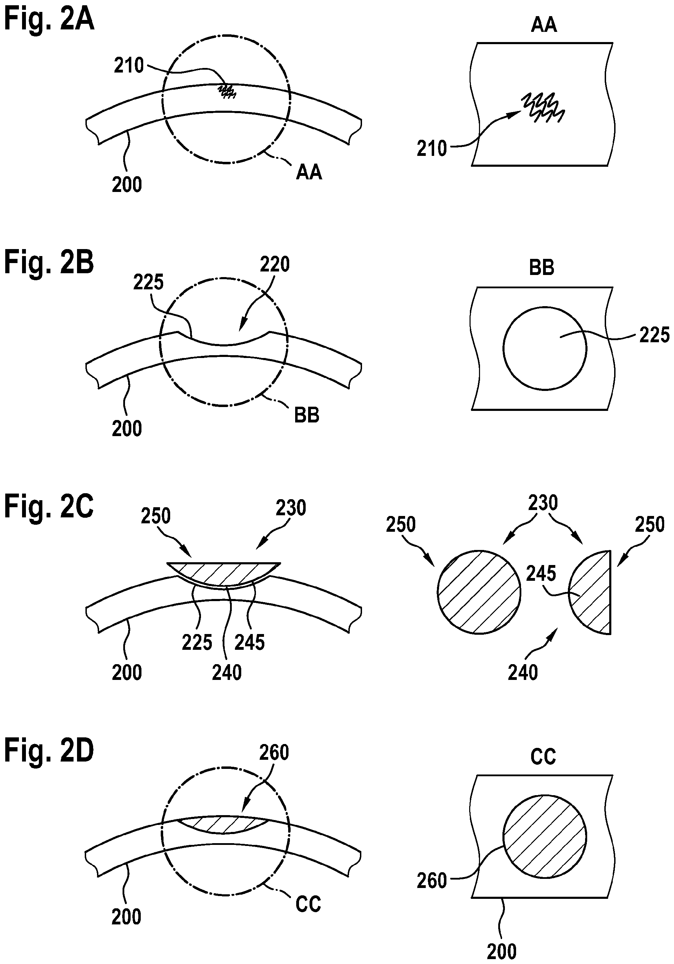

Figs. 2A-2D show a schematic view illustrating a fiber composite element. The fiber composite element is shown during different stages of repairing the fiber composite element according to a method of the present disclosure, similar to the views of Figs. 1A-1D. As shown in Fig. 2A, the fiber composite element 200 is shown having the locally deteriorated area 210. The locally deteriorated area 210 extends into the fiber composite element 200 and extending on the surface of the fiber composite element (excerpt AA).

As seen in Fig. 2B, a repair section 220 is formed having the continuous repair surface 225. The continuous repair surface 225 has a semi-circular shape in the cross-sectional view of Fig. 2B. As can be seen in the excerpt BB of Fig. 2B, and different to Fig. 1B, the continuous repair surface 225 is in the shape of a spherical surface segment.

Fig. 2C shows a pre-formed repair patch 230 arranged in the repair section 220. The pre-formed repair patch 230 has a contact surface 245 that is arranged to be in contact with the repair surface 225. The contact surface 245 is a spherical surface segment. The pre-formed repair patch has a first section 240 and second section 250. Advantageously, the concave spherical surface segment 225 and the convex spherical surface segment 245 facilitate alignment of the pre-formed repair patch. Particularly, the pre-formed repair patch can be shifted in any directions along the spherical surface segment 225 while at the same time provide a contact between the contact surface 145 and the repair surface 125. The pre-formed repair patch can be aligned in different positions in the polar direction and/or the azimuthal direction. The pre-formed repair patch can be aligned freely in the polar direction and/or the azimuthal direction. Advantageously, a constant bond gap is facilitated.

Similar to Figs. 1C - 1D, the pre-formed repair patch, when arranged in the repair section, extends outwards of the fiber-composite element 200. An exterior surface of the pre-formed repair patch may be made to match with the surface of the fiber-composite element. Fig. 2D shows the fiber composite element 200 having the repaired section 260. An exterior surface of the repaired section 260 matches with an undeteriorated surface of the fiber composite element in the repair section as shown in Fig. 2A. The excerpt CC shows that the repaired surface 160 extends over the entire repair section 120.

Fig. 3 is a schematic view of a fiber composite element having a repair section 320 and a pre-formed repair patch 330. The repair section 320 has a continuous repair surface 325. The repair section 320 curves inwards into the fiber composite element 300 to form the continuous repair surface 320. The repair section 320 has been formed by removing material from the fiber composite element. The dashed line indicates a shape of the fiber composite element before the repair section 320 has been formed by removing material from the fiber composite element. A surface of the repair section 320 corresponds to a surface that is formed in the fiber composite element by removing material from the fiber composite element.

The opening angle $\alpha$, the chamfer angle $\alpha/2$, the repair length (L), the repair depth (D) and the repair radius (R) are illustrated in Fig. 3. The repair section 320 is shown in a cross-sectional view having a semi-circular shape. The opening angle $\alpha$ is the angle over which semi-circular cross section of the repair section 320 extends. The repair radius (R) is the radius of the semi-circular cross section of the repair section 320. The chamfer angle $\alpha/2$ describes an entrance angle at which the repair section is formed in the fiber composite element. The chamfer angle $\alpha/2$ is measured between a theoretical flat plan spanning the repair section and a tangent on the repair section. The tangent is at a location of the repair section that is adjacent to the surface of the fiber composite element adjacent to the repair section. Particularly, the tangent is at a location of the repair section that is adjacent to an edge of the repair section. The theoretical flat plan may be defined by the circumferential interface. The repair length (L) is the length of the repair section. The repair length (L) describes a distance by which the repair section extends in the fiber composite element, particularly extends in a direction substantially parallel to a surface of the fiber composite element. The repair depth (D) is the depth of the repair section. The repair depth (D) describes the distance by which the repair section extends into the fiber composite element.

The pre-formed repair patch 330 has a contact surface 345 corresponding in shape to the repair surface 325. The pre-formed repair patch has a first section 340 forming the contact surface 345. The contact surface 345 correspond to a first part of a surface of the first section 340. A second part 346 of the surface of the first section 340 may be shaped differently. The second part 346 is not in contact with the repair surface. The contact surface 345 may be larger in size than the repair surface 325, such that the pre-formed repair patch can also be arranged slightly tilted in the repair section 325 and still allow for full contact of the contact surface 345 with the repair surface 325. The pre-formed repair patch has a second section 350. The second section 350 is adjacent and opposite of the first section 340, as illustrated by the dashed line. The second section 350 extends outwards of the fiber composite element when the pre-formed repair patch is arranged in the repair section 320. An exterior surface of the pre-formed repair patch may be formed to match an undeteriorated surface of the fiber composite element in the area of the repair section. The exterior surface may be formed by machining the second section 350.

The segment opening angle $\alpha'$, the segment chamfer angle $\alpha'/2$, the segment length (L), the segment depth (D) and the segment radius (R) are illustrated in Fig. 3. The pre-formed repair patch is shown in a cross-sectional view. The contact surface has a semi-circular shape. The segment opening angle $\alpha'$ is the angle over which semi-circular cross section of the contact surface 345 extends. The segment radius (R) is the radius of the semi-circular cross section of the contact surface 345. The chamfer angle $\alpha'/2$ is twice the segment opening angle $\alpha'$. The chamfer angle $\alpha'/2$ is measured at an interface of the contact surface 345 with the second part 346 or at the interface of the contact surface 345 with the second section 340. The segment length (L') is the length of the contact surface 345. The segment depth (D') is the depth of the contact surface 345. The segment depth (D') describes a distance by which the first section 340, particularly a part of the first section 340 having the contact surface 345, extends outwards to form a bulge.

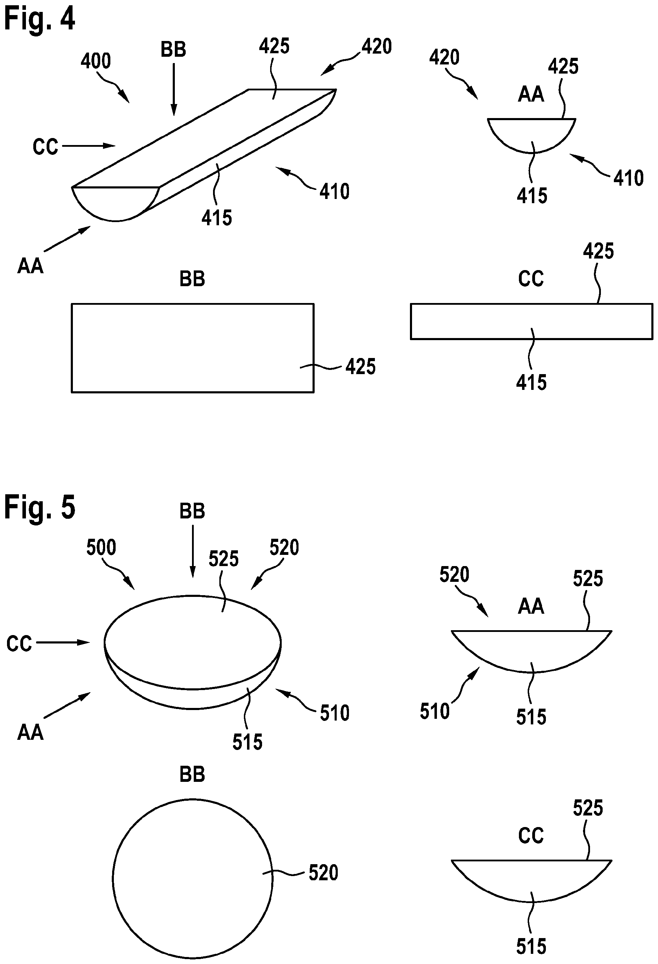

Figs. 4 shows a perspective schematic view of a repair patch 400 for a fiber composite element. The repair patch has a repair body with a first section 410 and a second section 420. The first section 410 is a cylindrical surface segment. The first section has a continuous contact surface 415. The first section 410 is pre-formed for use in a repair of the fiber composite element. The second section 420 is shown as a flat section. The second section 420 has a second surface 425. The second section may also be a different shape. Particularly, the second section 420 may be an arbitrary shape. Excerpt AA shows a front view of the repair patch 400. Excerpt BB shows a top view of the repair patch 400. Excerpt CC shows a side of the repair patch 400.

Fig. 5 shows a perspective schematic view of a repair patch 500 for a fiber composite element. The repair patch has a repair body with a first section 510 and a second section 520. The first section 510 is a spherical surface segment. The first section has a continuous contact surface 515. The first section 510 is pre-formed for use in a repair of the fiber composite element. The second section 520 is shown as a flat section. The second section 520 has a second surface 525. The second section may also be a different shape. Particularly, the second section 520 may be an arbitrary shape. Excerpt AA shows a front view of the repair patch 500. Excerpt BB shows a top view of the repair patch 500. Excerpt CC shows a side of the repair patch 500.

The repair patch 400, 500 may be uncured. The repair patch 400, 500 may be an uncured pre-form. The repair patch 400, 500 may be cured. The repair patch 400, 500 may be a pre-fabricated repair patch, particularly a cured pre-fabricated repair patch.

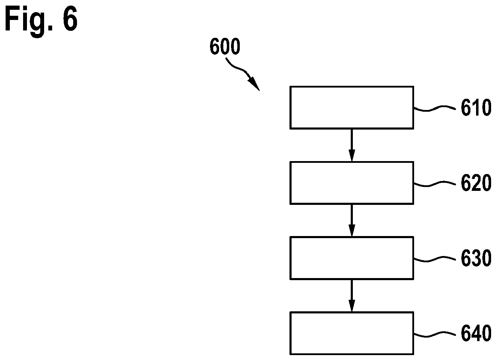

Fig. 6 shows a flow-chart illustrating a method 600 of repairing a fiber composite element having a locally deteriorated area.

At step 610 a repair section in the fiber composite element is formed by removing material from the fiber composite element in a repair area comprising the locally deteriorated area. The formed repair section having a continuous repair surface.

At step 620 a pre-formed repair patch is placed in the repair section. The pre-formed repair patch has a first section with a contact surface, the contact surface is at least partly shaped corresponding to the shape of the repair surface.

At step 630 the pre-formed repair patch is arranged to bring the contact surface into contact with the repair surface.

At step 640 the pre-formed repair patch is bonded to the repair section.

In some embodiments the pre-formed repair patch is a fiber composite element. Optionally, and not shown in the method illustrated in Fig. 6, the arranging the pre-formed repair patch at step 630 includes aligning the pre-formed repair patch such that a fiber orientation of the pre-formed repair patch is parallel to a fiber orientation of the fiber composite element.

Optionally, and not shown in the method illustrated in Fig. 6, an exterior surface of the pre-formed repair patch may be formed by removing material from the pre-formed repair patch, such that the exterior surface matches a surface of an undeteriorated surface of the fiber composite element in the repair area when the contact surface is arranged in contact with the repair surface. The exterior surface may be formed after binding the pre-formed repair patch to the repair surface in step 640.

In some embodiments the fiber composite element is a wind turbine blade. The method may be carried out while the wind turbine blade is installed in a wind turbine.

While the foregoing is directed to embodiments, other and further embodiments may be devised without departing from the basic scope, and the scope is determined by the claims that follow.

| Reference Signs | | | |
|---|---|---|---|
| 100: | Fiber composite element | 420: | Second section |
| 110: | Locally deteriorated surface | 425: | Second surface |
| 120: | Repair section | 500: | Repair patch |
| 125: | Repair surface | 510: | First section |
| 130: | Pre-formed repair patch | 515: | Contact surface |
| 140: | First section | 520: | Second section |
| 145: | Contact surface | 525: | Second surface |
| 150: | Second section | | |
| 160: | Repaired surface | | |
| 200: | Fiber composite element | | |
| 210: | Locally deteriorated surface | | |
| 220: | Repair section | | |
| 225: | Repair surface | | |
| 230: | Pre-formed repair patch | | |
| 240: | First section | | |
| 245: | Contact surface | | |
| 250: | Second section | | |
| 260: | Repaired surface | | |
| 300: | Fiber composite element | | |
| 320: | Repair section | | |
| 325: | Repair surface | | |
| 330: | Pre-formed repair patch | | |
| 340: | First section | | |
| 345: | Contact surface | | |
| 346: | Second part of the first section | | |
| 350: | Second section | | |
| 400: | Repair patch | | |
| 410: | First section | | |
| 415: | Contact surface | | |

## Claims

1. A method of repairing a fiber composite element having a locally deteriorated area, the method comprising:

   forming a repair section in the fiber composite element by removing material from the fiber composite element in a repair area comprising the locally deteriorated area, the formed repair section having a continuous repair surface;
   placing a pre-formed repair patch in the repair section, the pre-formed repair patch having a first section with a contact surface, the contact surface being at least partly shaped corresponding to the shape of the repair surface;
   arranging the pre-formed repair patch to bring the contact surface into contact with the repair surface; and

binding the pre-formed repair patch to the repair section.

2. The method of claim 1, wherein the pre-formed repair patch is a pre-fabricated repair patch.

3. The method of claim 1, wherein the pre-formed repair patch is an uncured pre-form and the method further comprising curing the pre-form.

4. The method of any one of claims 1 through 3, wherein a maximum curvature of the continuous repair surface is less than 5 m$^{-1}$, particularly less than 1 m$^{-1}$, more particularly less than 0.05 m$^{-1}$.

5. The method of any one of claims claim 1 through 4, wherein the repair surface is a concave cylindrical surface segment and/or the contact surface is a convex cylindrical surface segment; or
wherein the repair surface is a concave spherical surface segment and/or the contact surface is a convex spherical surface segment.

6. The method of claim 1, wherein binding the pre-formed repair patch to the repair section comprises providing an adhesive layer between the repair patch and the repair section.

7. The method of any one of claims 1 through 6, wherein the pre-formed repair patch is a fiber composite element, particularly wherein arranging the pre-formed repair patch comprises aligning the pre-formed repair patch such that a fiber orientation of the pre-formed repair patch is parallel to a fiber orientation of the fiber composite element.

8. The method of any one of claims 1 through 7, wherein:

   the fiber composite element is a wind turbine blade having a spanning direction;
   the pre-formed repair patch has an elongated direction; and
   the pre-formed repair patch is arranged with the elongated direction in the spanning direction.

9. The method of any one of claims 1 through 8, comprising forming an exterior surface of the pre-formed repair patch by removing material from the pre-formed repair patch, such that the exterior surface matches a surface of an undeteriorated surface of the fiber composite element in the repair area when the contact surface is arranged in contact with the repair surface, particularly wherein the forming the exterior surface is done after binding the pre-formed repair patch to the repair surface.

10. The method of any one of claims 1 through 9, wherein a chamfer angle $\alpha$ of the repair section is determined based on a shaft ratio of the fiber composite element in the repair section and/or an orientation of the repair section within the fiber composite element, particularly wherein a repair length (L) is up to 4 m, particularly up to 6m, wherein a repair radius (R) is up to 200 m, particularly up to 300 m, or wherein a repair depth (D) is up to 20 mm, particularly up to 30 mm.

11. The method of any one of claims 1 through 10, wherein the fiber composite element is a wind turbine blade and the method is carried out while the wind turbine blade is installed in a wind turbine.

12. A repair patch for a fiber composite element, the repair patch having a patch body comprising:

   a first section being a cylinder segment or a spherical segment, the first section having a continuous contact surface; and
   a second section adjacent to the first section;

   wherein the first section is pre-formed for use in a repair of the fiber composite element.

13. The repair patch of claim 12, wherein the first section has a segment length (L') up to 4m, a segment depth (D') up to 20 mm, and/or a segment radius (R') up to 300 m.

14. The repair patch of any one of claims 12 and 13, wherein a fiber orientation of the repair patch is parallel to an extended direction of the repair patch or wherein a fiber orientation of the repair patch is perpendicular to an extended direction of the repair patch.

15. A set of at least two repair patches according to any one of claims 12 through 14, wherein the repair patches differ in at least one of a segment length (L'), a segment depth (D') and a segment radius (R').

**Fig. 1A**

**Fig. 1B**

**Fig. 1C**

**Fig. 1D**

# Fig. 2A

# Fig. 2B

# Fig. 2C

# Fig. 2D

# Fig. 3

# Fig. 4

# Fig. 5

# Fig. 6

Europäisches
Patentamt

European
Patent Office

Office européen
des brevets

# EUROPEAN SEARCH REPORT

**Application Number**

EP 24 17 7393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/036482 A1 (STENBAEK KNUD NIELSEN [DK] ET AL) 17 February 2011 (2011-02-17) <br> * paragraphs [0001], [0003], [0004], [0013] - [0023], [0028], [0049], [0050], [0053], [0054], [0057] * <br> * figures 1,4-7 * | 1-4,6,7, 9,10 | INV. <br> B29C73/10 <br> B29C73/26 |
| X | DE 10 2008 051380 B4 (EADS DEUTSCHLAND GMBH [DE]) 14 June 2012 (2012-06-14) | 1-3,5-7, 9,10, 12-14 | |
| Y | * paragraphs [0001], [0007], [0018], [0019] * <br> * figure 1 * | 15 | |
| X | US 2013/012086 A1 (JONES DANIEL THOMAS [GB] ET AL) 10 January 2013 (2013-01-10) <br> * paragraphs [0001], [0013] - [0019], [0040], [0061] - [0065], [0073], [0074], [0077], [0092] - [0094] * <br> * figure 4 * | 1-3,6-9 | |
| X | EP 4 122 686 A1 (AIRBUS OPERATIONS GMBH [DE]) 25 January 2023 (2023-01-25) | 1,2,9 | TECHNICAL FIELDS SEARCHED (IPC) <br><br> B29C |
| Y | * paragraphs [0001], [0009] * <br> * figure 1 * | 15 | |
| X | US 2022/388259 A1 (STAAL REMMELT ANDREW [US] ET AL) 8 December 2022 (2022-12-08) | 1,2,6,7, 9,10 | |
| Y | * paragraphs [0008] - [0010], [0014], [0015], [0062] * <br> * figures 2-4 * | 15 | |
| X | US 2020/298351 A1 (GIROLAMO DONATO [NL]) 24 September 2020 (2020-09-24) <br> * paragraphs [0008], [0009], [0013], [0019], [0024]; figures 1-10 * | 1-3,6-9, 11 | |

-/--

The present search report has been drawn up for all claims

| Place of search | Date of completion of the search | Examiner |
|---|---|---|
| The Hague | 18 November 2024 | Ullrich, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ..................................................................................

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 24 17 7393

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/135820 A1 (OLSON STEVEN [US]) 3 June 2010 (2010-06-03) * paragraphs [0006] - [0009], [0019] - [0021], [0023] - [0025], [0028], [0031], [0032] * * figures 1-6 * | 1-3,6-9, 11 | |
| X | US 2021/039341 A1 (SHIMONO KODAI [JP] ET AL) 11 February 2021 (2021-02-11) * paragraphs [0001], [0007], [0012], [0017] - [0021], [0035], [0036], [0043] - [0045] * * figures 1-5 * | 1,2,6,7, 9 | |
| X | US 2015/090392 A1 (BERTRAND BLAKE ANTHONY [US] ET AL) 2 April 2015 (2015-04-02) * paragraphs [0002], [0008] - [0011], [0042] * * figures 3-5 * | 1-3,6,7, 9 | |
| | | | TECHNICAL FIELDS SEARCHED (IPC) |

The present search report has been drawn up for all claims

| Place of search | Date of completion of the search | Examiner |
|---|---|---|
| The Hague | 18 November 2024 | Ullrich, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                          
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 7393

This annex lists the patent family members relating to the patent documents cited in  the above-mentioned European search report.
The members are as contained in the European Patent Office EDP file on
The European Patent Office is in no way liable for these particulars which are merely given for the purpose of information.

18-11-2024

| Patent document cited in search report | | | Publication date | Patent family member(s) | | | Publication date |
|---|---|---|---|---|---|---|---|
| US 2011036482 | A1 | | 17-02-2011 | CN | 101903162 | A | 01-12-2010 |
| | | | | DK | 2222454 | T3 | 27-01-2014 |
| | | | | EP | 2222454 | A1 | 01-09-2010 |
| | | | | ES | 2444940 | T3 | 27-02-2014 |
| | | | | US | 2011036482 | A1 | 17-02-2011 |
| | | | | WO | 2009080038 | A1 | 02-07-2009 |
| DE 102008051380 | B4 | | 14-06-2012 | NONE | | | |
| US 2013012086 | A1 | | 10-01-2013 | BR | 112012014481 | A2 | 16-08-2016 |
| | | | | CN | 102712773 | A | 03-10-2012 |
| | | | | DK | 2513206 | T3 | 02-07-2018 |
| | | | | EP | 2513206 | A1 | 24-10-2012 |
| | | | | GB | 2475352 | A | 18-05-2011 |
| | | | | US | 2013012086 | A1 | 10-01-2013 |
| | | | | WO | 2011073107 | A1 | 23-06-2011 |
| EP 4122686 | A1 | | 25-01-2023 | NONE | | | |
| US 2022388259 | A1 | | 08-12-2022 | NONE | | | |
| US 2020298351 | A1 | | 24-09-2020 | CN | 111720261 | A | 29-09-2020 |
| | | | | DK | 3712423 | T3 | 30-01-2023 |
| | | | | EP | 3712423 | A1 | 23-09-2020 |
| | | | | EP | 4187080 | A1 | 31-05-2023 |
| | | | | ES | 2935395 | T3 | 06-03-2023 |
| | | | | US | 2020298351 | A1 | 24-09-2020 |
| US 2010135820 | A1 | | 03-06-2010 | CN | 101956650 | A | 26-01-2011 |
| | | | | DK | 2273102 | T3 | 27-06-2016 |
| | | | | EP | 2273102 | A2 | 12-01-2011 |
| | | | | US | 2010135820 | A1 | 03-06-2010 |
| US 2021039341 | A1 | | 11-02-2021 | EP | 3750698 | A1 | 16-12-2020 |
| | | | | JP | 7036694 | B2 | 15-03-2022 |
| | | | | JP | 2020040341 | A | 19-03-2020 |
| | | | | US | 2021039341 | A1 | 11-02-2021 |
| | | | | WO | 2020054111 | A1 | 19-03-2020 |
| US 2015090392 | A1 | | 02-04-2015 | KR | 20160065941 | A | 09-06-2016 |
| | | | | US | 2015090392 | A1 | 02-04-2015 |
| | | | | WO | 2015050634 | A1 | 09-04-2015 |

EPO FORM P0459

For more details about this annex : see Official Journal of the European Patent Office, No. 12/82